Europäisches Patentamt

European Patent Office

Office européen des brevets

(11) Numéro de publication : **0 544 569 A1**

# DEMANDE DE BREVET EUROPEEN

(21) Numéro de dépôt : 92403122.2

(22) Date de dépôt : 20.11.92

(51) Int. Cl.⁵ : **C09D 133/06,** C09D 125/14, C09J 133/06, C09J 125/14, C08K 5/54

(30) Priorité : 27.11.91 FR 9114633

(43) Date de publication de la demande : 02.06.93 Bulletin 93/22

(84) Etats contractants désignés : DE FR GB IT

(71) Demandeur : RHONE-POULENC CHIMIE 25, quai Paul Doumer F-92408 Courbevoie Cédex (FR)

(72) Inventeur : d'Allest, Jean-François 7, rue Pierre Dupont F-75010 Paris (FR) Inventeur : Decloitre, Yves 9, avenue Mac Mahon F-75017 Paris (FR)

(74) Mandataire : Seugnet, Jean Louis et al RHONE-POULENC CHIMIE Direction de la Propriété Industrielle 25, Quai Paul Doumer F-92408 Courbevoie Cedex (FR)

(54) Dispersions aqueuses de polymères styrène/acrylate carboxylés et leurs utilisations comme liant dans des compositions adhésives et de revêtement.

(57) La présente invention concerne une dispersion de polymère à pH compris entre 4 et 8 comportant :
  a) des particules de polymère présentant une température de transition vitreuse comprise entre - 20 et + 50°C et résultant de la polymérisation en émulsion des monomères suivants :
    — 30 à 70 parties en poids de styrène,
    — 30 à 70 parties en poids de (meth)acrylate d'alkyle en $C_1$-$C_8$,
    — 0,5 à 8 parties en poids d'un acide carboxylique à insaturation éthylénique, et de :
  b) 0,1 à 2 % en poids de gamma-aminopropyltriéthoxysilane par rapport au poids de monomères a), ladite dispersion contenant de 30 à 70 % en poids de matière sèche.
  Utilisation des dispersions aqueuses comme liant dans des compositions adhésives et de revêtement et comme additif pour ciment.

La présente invention concerne des dispersions aqueuses de polymères styrène/acrylate carboxylés et leur utilisation comme liants dans des compositions adhésives et de revêtements.

De telles dispersions aqueuses de polymères (c'est-à-dire des latex) doivent présenter un ensemble de propriétés qui permettent de les utiliser comme liant dans des compositions multiples de revêtement telles que :
- colles (adhésifs) pour bâtiment, en particulier comme colles pour carrelages,
- peintures diverses, et
- crépis de façades pour bâtiment.

Ces dispersions aqueuses proprement dites doivent présenter une stabilité au stockage convenable c'est-à-dire ne pas floculer et ne pas présenter des agrégats de trop grandes dimensions.

Elles doivent conférer aux compositions à la fois un pouvoir liant, une adhésivité sur la plupart des substrats utilisés dans le bâtiment et une tenue à l'eau satisfaisants.

Par ailleurs, pour être utilisables dans les compositions de revêtement indiquées ci-dessus, ces compositions doivent être filmogènes à température ambiante et présenter une température de transition vitreuse comprise entre - 20°C et + 50°C.

Plusieurs solutions ont déjà été proposées dans la littérature pour résoudre ce problème. On citera plus particulièrement :
- FR-A 2.154.638 qui enseigne de façon très générale l'addition à des dispersions de polymères vinyliques quelconques, de 0,3 à 5 % en poids de trialcoxysilane comportant un radical organique à insaturation oléfinique en position oméga.
- US-A 3.649.582 qui enseigne un latex de polymère vinylique quelconque thermoplastique présentant une température de transition vitreuse d'au moins 100°C en vue de thermoformer des articles de formes diverses renforcés par des fibres d'amiante.

    Le latex comporte un aminosilane pouvant être ajouté au latex en postpolymérisation de façon à améliorer les propriétés mécaniques de l'article thermoformé.
- EP-A 215.518 décrit les dispersions aqueuses de polymère vinylique utilisables pour faire des compositions de revêtement, comportant un aminosilane ajouté en postpolymérisation. Le polymère vinylique de départ comporte nécessairement un monomère époxydé.

Les documents cités ci-dessus ont certes permis à l'état de la technique de progresser dans le bon sens, notamment en vue d'améliorer l'adhésion à l'état humide des compositions de revêtements préparées à partir de latex vinyliques. Cependant les dispersions aqueuses décrites dans ces documents ne présentent pas à la fois une stabilité au stockage, un pouvoir filmogène correct et une adhésivité à l'état humide satisfaisants.

Le but de la présente invention est précisément de proposer une dispersion aqueuse de polymères utilisables pour les compositions de revêtement et qui présente l'ensemble des propriétés avantageuses indiquées ci-dessus.

Ce but et d'autres est atteint par la présente invention qui concerne en effet une dispersion aqueuse à pH compris entre 4 et 8 comportant :

a) des particules de polymère présentant une température de transition vitreuse comprise entre - 20 et + 50°C et résultant de la polymérisation en émulsion des monomères suivants :
- 30 à 70 parties en poids de styrène,
- 30 à 70 parties en poids de (meth)acrylate d'alkyle en $C_{1-C8}$,
- 0,5 à 8 parties en poids d'un acide carboxylique à insaturation éthylénique, et de :
- b) 0,1 à 2 % de préférence 0,4 à 1, en poids de gamma-aminopropyltriéthoxysilane, par rapport au poids de monomères a), ladite dispersion contenant de 30 à 70 % en poids de matière sèche.

Après de longues et coûteuses recherches, la présente invention a permis de montrer que, parmi tous les aminosilanes connus et disponibles, seul le gamma-aminopropyltriéthoxysulane dénommé par la suite AMEO, permet de conférer à la dispersion aqueuse de polymère l'ensemble des propriétés bénéfiques indiquées ci-dessus.

En particulier seul l'AMEO, ajouté à la dispersion en postpolymérisation et à un pH compris entre 4 et 8, de préférence entre 6 et 7 permet d'obtenir un latex stable au stockage sans augmentation de taux de grains.

Une telle stabilité au stockage ne peut pas être obtenue avec les autres aminosilanes connus et disponibles tels que, en particulier, le gamma-aminopropyltriméthoxysilane, le gamma-uréidopropyltriéthoxysilane, l'aminopropyl-silsesquioxane et l'amino-2 éthyl, amino-3 propyltriméthoxysilane.

Le polymère est préparé par polymérisation en émulsion des monomères ci-après :

1) 30 à 70, de préférence 30 à 45 parties en poids de styrène. Une fraction du styrène peut être bien entendu remplacé par ses homologues tels que les alpha- meta- ou orto-styrène et le paravinyltoluène. Cependant le styrène est le monomère préféré.

2) 30 à 70, de préférence 45 à 70 parties en poids de (meth)acrylate d'alkyle en $C_1$-$C_8$ linéaire ou ramifié

parmi lesquels on peut citer l'acrylate et le méthacrylate de méthyle, de propyle, de butyle et d'éthyl-2 hexyle. Le n-butylacrylate est le monomère préféré.

3) de 0,5 à 8, de préférence 2 à 6 parties en poids d'un acide carboxylique à insaturation oléfinique tel que l'acide itaconique, crotonique, maléique, fumarique, acrylique et méthacrylique. L'acide acrylique et méthacrylique sont les acides préférés.

Selon un mode de réalisation préféré de l'invention, les monomères comportent en outre :

4) de 0,1 à 2 parties en poids d'un monomère surfactant sulfoalkyle choisi parmi les sels cationiques du sulfo(ethyl)(meth)acrylate, du sulfopropyl(meth)acrylate, du vinylsulfonate, du (meth)allylsulfonate et de l'acrylamido-2 methyl-2 propane sulfonate.

L'utilisation du monomère surfactant sulfoalkyle permet de diminuer ou de supprimer les agents émulsifiants utilisés classiquement lors de la polymérisation en émulsion du polymère ce qui est avantageux pour les compositions de revêtement en conférant notamment aux compositions de revêtement une meilleure résistance à l'humidité.

On préfère selon l'invention les sels de sodium, des surfactants sulfoalkyle et en particulier le méthallylsulfonate de sodium et le sulfoéthylméthacrylate de sodium.

Selon un mode particulier de réalisation perfectionné et préféré de l'invention les monomères comportent en outre :

- de 0,1 à 2 parties en poids d'un silane insaturé de formule :

$$R_1 - Si - (OR_2)_3 \qquad (1)$$

dans laquelle :

$R_1$ est un reste organique présentant une insaturation éthylénique en position omega,

les radicaux $R_2$ identiques ou différents représentent un radical alkyle en $C_1 - C_4$ porteurs éventuellement d'un radical alcoxy en $C_1 - C_3$.

Les silanes de formule (1) sont décrits en détail dans FR-A 2.154.638 cité comme référence.

Selon un mode de réalisation préféré, le silane de formule (1) est le vinyltriméthoxysilane (VTMO).

L'addition de silane de formule (1) lors de la polymérisation, de préférence au fur et à mesure de la polymérisation, permet d'améliorer la stabilité pendant la polymérisation et au stockage des émulsions et l'adhésion à l'état humide des compositions de revêtements. Sur ces 2 propriétés, on a pu mettre en évidence selon l'invention, l'existence d'une synergie entre le silane de formule (1) et l'AMEO.

L'homme du métier, par des expériences de routine, n'aura aucune difficulté, notamment par le choix des monomères 1), 2), 3), par les quantités respectives utilisées et par les conditions particulières utilisées pour la polymérisation en émulsion, pour obtenir un polymère ayant une température de transition vitreuse comprise entre - 20 et + 50°C, de préférence entre 0 et 30°C.

La polymérisation en émulsion se fait selon les modes opératoires bien connus de préparation des latex. Des exemples représentatifs de modes opératoires sont en particulier enseignés dans les brevets US-A 3.575.913 et US-A 3.563.946 cités comme référence.

L'agent émulsifiant utilisé peut être anionique et/ou non ionique, en sachant que tout ou partie de cet agent émulsifiant peut être remplacé par l'utilisation d'un monomère surfactant sulfoalkyle cité ci-dessus.

Parmi les agents émulsifiants anioniques, peuvent être cités les sels d'acides gras ; les alkylsulfates, alkylsulfonates, alkylarylsulfonates, alkylsulfosuccinates, alkylphosphates alcalins ; les sulfosuccinates d'alkyle ; les sulfonates d'éthers alkylphénolpolylycoliques ; les sels d'esters d'acides alkylsulfopolycarboxyliques ; les produits de condensation des acides gras avec les acides oxy- et amino-alcanesulfoniques ; les dérivés sulfatés des éthers polyglycoliques ; les esters sulfatés d'acides gras et de polyglycols ; les alcanolamides d'acides gras sulfatés.

Parmi les agents émulsifiants non ioniques, sont à mentionner les esters gras de polyalcools, les alcanolamides d'acides gras, les polyoxydes d'éthylène, les copolyoxydes d'éthylène et de propylène, les alkylphénols oxyéthylénés.

Les quantités d'agent(s) émulsifiant(s) à mettre en oeuvre sont de l'ordre de 0,01 à 5 % en poids par rapport au(x) monomère(s) et l'introduction est effectuée soit en totalité avant la polymérisation, soit en partie avant la polymérisation, la partie complémentaire étant ajoutée au milieu réactionnel au cours de la polymérisation par fractions successives ou en continu, soit encore en totalité au cours de la polymérisation par fractions successives ou en continu.

La quantité d'eau à mettre en oeuvre lors de la polymérisation doit être telle que la concentration du ou des monomères ne dépasse pas de préférence 60 % en poids et que la teneur en eau de la dispersion finale obtenue soit comprise entre 30 et 70 % en poids.

Comme catalyseur de polymérisation, on peut utiliser tous les catalyseurs hydrosolubles engendrant des radicaux libres utilisés couramment pour la polymérisation en émulsion tels l'eau oxygénée, les persulfates de sodium utilisés seul ou en combinaison avec un agent réducteur tel que le dithionite de sodium et le sulfite de sodium. On peut également utiliser des agents de transfert de chaîne du type disulfure d'aminophényle ou aminophénylmercaptan et des agents de réticulation.

La copolymérisation se fait de préférence en milieu acide et, en fin de polymérisation, le pH de la dispersion est ajusté entre 4 et 8, de préférence entre 6 et 7, avant d'ajouter l'aminosilane. Le respect de cette zone de pH est tout à fait important pour que la dispersion aqueuse possède bien les propriétés désirées.

Comme indiqué ci-dessus, la dispersion aqueuse selon l'invention est particulièrement utile comme liant pour compositions de revêtement en particulier dans l'industrie du bâtiment.

Ces compositions de revêtement comportent, en plus de la dispersion aqueuse, des charges et des pigments.

Comme exemples de composition de peinture, on recommande selon l'invention une peinture constituée de :

- 5 à 60 parties en poids de dispersion selon l'invention,
- 30 à 50 parties en poids de charge,
- 5 à 15 parties en poids de pigment.

Comme exemples de charge, on peut citer, le quartz broyé, le kaolin, la silice de combustion, la silice de précipitation, le carbonate de calcium, le talc et le gypse broyé.

Comme exemples de pigments, on peut citer le dioxyde de titane, l'oxyde de zinc et le sulfure de zinc.

Les peintures comportent généralement en outre des agents mouillants, des épaississants, des fongicides et des anti-mousses.

Les compositions adhésives ou les colles pour bâtiment et en particulier pour carrelages peuvent avoir la composition suivante :

- 10 à 40 parties en poids de dispersion selon l'invention et,
- 50 à 100 parties en poids de charges.

Les colles selon l'invention présente une adhérence remarquable à l'état humide sur le verre, les matières céramiques, la faïence, le béton, les briques et les matériaux en polystyrène, polychlorure de vinyle et polyurethanne.

Les charges utilisées peuvent être les mêmes que celles citées ci-dessus pour les peintures.

Ces colles peuvent contenir en outre des agents mouillants, des épaississants organiques ou minéraux et des fongicides.

Les dispersions aqueuses selon l'invention sont également utilisables comme additif au ciment à une teneur de 1 à 100 parties en poids, de préférence de 2 à 20 parties, pour 100 parties de ciment.

D'autres avantages et caractéristiques de la présente invention apparaîtront à la lecture des exemples suivants donnés à titre illustratif nullement limitatifs.

Dans ces exemples, les viscosités cinématiques sont mesurées à l'aide d'un viscosimètre Brookfield à 50 tours/mn.

**Exemple 1 comparatif** : Latex témoin sans silane

Dans un réacteur d'une capacité de 5 litres équipé d'un agitateur, d'un dispositif caloporteur, d'un réfrigérant à reflux et de dispositifs permettant une introduction en continu dans le réacteur des monomères et de l'initiateur (persulfate d'ammonium), l'eau (80 parties - 1280 g) est chargée à froid avec :

. l'émulsifiant anionique (dodécylé sulfonate de sodium),
. un comonomère ionique (méthallyle sulfonate de sodium).

On effectue la polymérisation à 80°C pendant 5 heures de :

. 36 parties en poids de styrène (576 g),
. 60 parties en poids d'acrylate de n-butyle (960 g),
. 4 parties d'acide acrylique (64 g).

Une fois la polymérisation achevée, on règle le pH du latex à 8 par addition de $NH_4OH$. La teneur en matière sèche du latex est de 50 %.

**Exemple 2 et exemples comparatifs 3, 4 et 5** :

On répète exactement le mode opératoire de l'exemple 1 sauf que, une fois la polymérisation achevée, on règle le pH du latex à 6 par addition de $NH_4OH$. On ajoute alors 0,5 % par rapport au poids de monomères utilisés d'un silane aminé, puis le pH de la dispersion est ajusté à pH 8 avec $NH_4OH$.

Selon l'exemple 2, le silane aminé est le gamma-aminopropyle triéthoxysilane (AMEO).

Selon l'exemple comparatif 3, le silane aminé est l'aminopropyle silsesquioxane (AMSI).

Selon l'exemple comparatif 4, le silane aminé est le 2-aminoéthylé 3-aminopropyle triméthoxysilane (AMEPMO).

Selon l'exemple comparatif 5, le silane aminé est le gamma-aminopropyle triméthoxysilane (AMMO).

La teneur en matière sèche du latex final est de 50 % pour l'exemple 2 et les exemples comparatifs 3, 4 et 5.

**Exemple 6** :

On répète exactement le mode opératoire de l'exemple 2 sauf que, pour la neutralisation du latex après la polymérisation, la quantité d'aminosilane est limitée à 0,25 % et, en outre, on rajoute aux trois monomères principaux (styrène, acrylate de butyle et acide acrylique) 0,25 % de vinyle triméthoxysilane (VTMO), par rapport au poids de ces trois monomères.

**Exemple 7** : Stabilité des latex :

Cette stabilité est appréciée par la variation de la viscosité et du taux de grains de la dispersion 10 jours après sa préparation (stockage à 23°C).

Les grains sont récupérés par filtration de la dispersion sur un tamis de maille de 43 $\mu$m ; le taux de grains est le rapport du poids de grains sur le poids de polymère sec présent initialement dans le latex.

Les résultats obtenus sont rassemblés dans le tableau 1 ci-après où il apparaît que le latex contenant l'AMEO de l'exemple 2 et le témoin sans aminosilane de l'exemple 1 sont stables : après 10 jours de stockage, la viscosité des dispersions n'a pas évolué et aucun grain ne s'est formé. Il en est de même pour le latex de l'exemple 6.

Par contre, les latex partiellement neutralisés avec les autres aminosilanes, exemples comparatifs 3, 4 et 5 voient leur viscosité chuter de 30 à 40 %. Après filtration, on constate que des grains se sont formés en grande quantité, de 1 à 2 % par rapport au polymère.

**Exemple 8** : Tenue à l'eau des films de polymère

La résistance à la reprise d'eau des films est évaluée à l'aide d'un test bien connu des gens du métier des peintures : le Hazemètre.

**Le principe du test** est le suivant :

La pénétration de l'eau dans un film de polymère issu d'un latex conduit à un blanchiment du film qu'on appelle louchissement. Ce louchissement est d'autant plus important que la quantité d'eau qui a pénétré dans le film est élevée. Il s'évalue au Hazemètre par le rapport de l'intensité lumineuse diffusée avec l'intensité incidente d'un faisceau lumineux éclairant le film sous incidence normale.

Les films de latex de 30 $\mu$m sont tirés sur plaque de verre et séchés à 23°C et 50 % d'humidité relative pendant 15 jours avant d'être plongés simultanément dans l'eau. Les résultats des mesures de Haze après 35 jours dans l'eau sont rassemblés dans le tableau 1 ci-après.

Le film tiré à partir du latex sans aminosilane (exemple comparatif 1) louchit très rapidement, et devient blanc et opaque après un séjour de 96 heures dans l'eau (Haze = 100 %). Le louchissement s'accompagne de la déformation du film qui forme des plis et se décolle par endroit de la plaque de verre, sous l'action du gonflement par l'eau.

Les films tirés à partir des dispersions partiellement neutralisées avec des aminosilanes (exemples 2, 6 et exemples comparatifs 3, 4 et 5) évoluent tous de la même manière. Cette évolution est nettement différente de celle du témoin (exemple 1 comparatif) le louchissement du film est très faible et se stabilise après 24 heures dans l'eau aux valeurs de Haze rapportées dans le tableau 1 (entre 10 et 25 %). Et contrairement au témoin sans aminosilane, l'état des films n'évolue pas même après un séjour de 35 jours dans l'eau (film uniformément lisse, pas de décollement de la plaque de verre).

Ces résultats montrent que les aminosilanes permettent d'améliorer considérablement la tenue à l'eau des polymères. Du tableau 1, il apparaît que l'AMEO (exemple 2) est le plus efficace de tous les aminosilanes testés. La bonne synergie entre l'AMEO et le VTMO conduit à une amélioration supplémentaire de la tenue à l'eau (exemple 6).

**Exemple 9** : Pouvoir liant des latex en application peinture :

Le pouvoir liant des dispersions est évalué par le test de résistance à l'abrasion humide des feuils de peintures (norme DIN 53778), bien connu des gens du métier. Ce test caractérise la brossabilité des feuils de peinture.

Ces latex ont été formulés à la concentration pigmentaire volumique de 70 % selon la formule suivante :

| CONSTITUANTS | Quantité (parties en poids) | FABRICANT |
|---|---|---|
| Eau | 11,0 | |
| Tylose MH 6000 XP®(2%/H$_2$O) carboxyméthylcellulose épaississant | 19,4 | (Hoechst) |
| Coatex P90® Dispersant acrylique polyacrylate d'ammonium | 0,3 | (Coatex) |
| Proxel GXL® biocide | 0,15 | (I.C.I.) |
| Nopco 8034® antimousse organique | 0,1 | (Henkel-Nopco) |
| TiO$_2$ (RL 68)® pigment blanc | 5,3 | (Thann et Mulhouse) |
| Durcal 5® carbonate de calcium | 32,0 | (Omya) |
| Omyalite 90 ® de calcium carbonate de calcium | 21,3 | (Omya) |
| Latex | 19,3 | |

Les résultats s'évaluent en nombre de cycles de brossage : plus le nombre de cycles est élevé, meilleure est la résistance à l'abrasion humide des feuils de peinture. L'ensemble des résultats obtenus sont rassemblés dans le tableau 1 ci-après.

Du tableau 1, il ressort que l'addition d'aminosilane en post-polymérisation entraîne une amélioration du pouvoir liant des latex de 20 à 40 %. Le gain le plus important est obtenu avec l'AMEO (exemple 2).

La bonne synergie entre le VTMO et l'AMEO (exemple 6) conduit à une amélioration supplémentaire du pouvoir liant des dispersions.

**Exemple comparatif 10** : synthèse du latex témoin.

On répète exactement le mode opératoire de l'exemple 1 sauf qu'on polymérise les monomères styrène/acrylate de n-butyle/acide acrylique suivant le rapport pondéral 48/48/4. Une fois la polymérisation achevée, on neutralise le latex à pH 8 avec de la soude.

La teneur en matière sèche du latex est de 50 %.

**Exemple comparatif 11** :

On répète exactement le mode opératoire de l'exemple 10 sauf qu'on ajoute aux trois monomères principaux en cours de polymérisation 0,5 % en poids (par rapport au poids desdits monomères) de vinyle triméthoxysilane (VTMO).

**Exemples 12 et 13** :

On répète exactement le mode opératoire de l'exemple 10. Après polymérisation, le latex est neutralisé jusqu'à pH 7 avec de la soude. On ajoute alors, par rapport au poids de monomère 0,5 % (exemple 12) ou 1 % (exemple 13) de 3-amino propyle triéthoxysilane.

**Exemple 14 et 15** :

On répète exactement le mode opératoire de l'exemple 11 sauf qu'après polymérisation le latex est neutralisé jusqu'à pH 7 avec la soude. On ajoute, par rapport au poids de monomère, 0,5 % (exemple 14) ou 1 % (exemple 15) de 3-aminopropyle triéthoxysilane (AMEO).

**Exemple 16** : Evaluation de la stabilité au stockage des latex :

Cette stabilité est appréciée par la mesure de la viscosité initiale $\eta°$ du latex et de la viscosité $\eta$ du latex après 30 jours de stockage.

Les résultats obtenus sont rassemblés dans le tableau 2 ci-après où il apparaît que l'AMEO utilisé seul ou en combinaison avec le VTMO présente une bonne stabilité au stockage.

**Exemple 17** : Evaluation du pouvoir liant des latex en application colle-carrelage :

Le pouvoir liant des dispersions est évalué par le test de résistance à l'arrachage humide des colles-carrelages formulées avec ces latex. Ces tests visent des liants de la classe C et sont effectuées selon les normes de l'UEATC (Union Européenne pour l'Agrément Technique dans la Construction).

Les colles-carrelages testées sont formulées avec 14 % en poids de liant qui est en fait un latex synthétisé selon l'un des exemples 9 à 14.

La formule des colles-carrelage est la suivante :

| Constituants | Fabricant | Quantité en % en poids |
|---|---|---|
| LATEX (liant)   choisi parmi les exemples 10 à 15 | | 14,00 |
| METHOCEL J75MS® (épaississant cellulosique) | (DOW CHEMICAL) | 0,25 |
| COATEX P90® (dispersant polyacrylate) | (COATEX) | 0,60 |
| BUTYLGLYCOL® (agent de coalescence) | (PROLABO) | 1,40 |
| WHITE SPIRIT® (agent de coalescence) | (DOCK DES ALCOOLS) | 1,40 |
| NOPCO 8034® (antimousse) | (HENKEL-NOPCO) | 0,25 |
| PROXEL® (biocide) | (I.C.1.) | 0,20 |
| CRAIE E.V. (charge) | (OMYA) | 25,00 |
| SILICE S1 (charge) | (SILICE & KAOLIN) | 49,00 |
| EAU | | 7,90 |
| | | ---------- |
| TOTAL | | 100,00 |

Selon un premier test, on enduit un carreau en céramique et on le laisse sécher 7 jours à sec, puis on l'immerge 7 jours dans l'eau et on mesure alors la force d'arrachement de la colle-carrelage en N/mm2.

Selon un deuxième test, on enduit un carreau en céramique, on le laisse sécher 7 jours puis on l'immerge 21 jours dans l'eau puis on le laisse sécher 1 journée et on mesure alors la force d'arrachement.

Les résultats obtenus sont rassemblés dans le tableau 2 ci-après.

La force d'arrachement augmente avec la résistance à l'arrachement de la colle, c'est-à-dire avec le pouvoir liant du latex.

Le tableau 2 illustre la très nette amélioration de la résistance à l'arrachement du joint de colle à l'état humide. Cette résistance augmente avec la teneur en AMEO.

Le tableau 2 démontre de plus l'existence d'une synergie due à l'utilisation simultanée de VTMO et d'AMEO.

T A B L E A U 1

| LATEX DE L'EXEMPLE | SILANE UTILISE | VISCOSITE (mpa.s) | | | TAUX DE GRAINS (%) | | Haze (%) sur film 15j sec + 35j humide | RAH* nbre de cycles (moyen) |
|---|---|---|---|---|---|---|---|---|
| | | initiale $\eta^\circ$ | après 10j de stokage $\eta$ | $\eta/\eta^\circ$ | initial | après 10j de stockage à 23°C | | |
| 1 | témoin (sans aminosilane) | 310 | 310 | 1,0 | 0 | 0 | 100(e) | 820 |
| 2 | + 0,5 % AMEO(a) | 280 | 280 | 1,0 | 0 | 0 | 14 | 1160 |
| 3 | + 0,5 % AMSI(b) | 520 | 340 | 0,6 | 0 | 1,6 | 22 | 980 |
| 4 | + 0,5 % AMEPMO(c) | 440 | 308 | 0,7 | 0 | 1,6 | 27 | 1100 |
| 5 | + 0,5 % AMMO(d) | 480 | 340 | 0,7 | 0 | 1,9 | 24 | 1080 |
| 6 | VTMO (0,25 %) + AMEO (0,25 %) | 440 | 440 | 1,0 | 0 | 0 | 10 | 1280 |

(a) 3-aminopropyle triéthoxysilane
(c) 2-aminoéthyle 3-aminopropyle triméthoxysilane
(e) film blanc et opaque
* RAH : résistance à l'abrasion humide

(b) aminopropyle silsesquioxane
(d) 3-aminopropyle triméthoxysilane
j. : jour

T A B L E A U 2

| LATEX DE L'EXEMPLE | SILANE UTILISE | VISCOSITE (mpa.s-1) | | | Force d'arrachement de la colle-carrelage (N/mm2) | |
|---|---|---|---|---|---|---|
| | | initiale $\eta°$ | après 30j de stokage $\eta$ | $\eta/\eta°$ | 7 jours sec + 7 jours dans l'eau | 7 jours sec + 21 jours dans l'eau + 1 jour sec |
| 10 | témoin | 1200 | 1335 | 1,1 | 0,1 | 0,15 |
| 11 | + 0,5 % AMEO(a) | 1150 | 1305 | 1,15 | 0,16 | 0,26 |
| 12 | + 1 % AMEO | 1325 | 1280 | 0,95 | 0,24 | 0,27 |
| 11 | + 0,5 % VTMO(b) | 600 | 565 | 0,95 | 0,18 | 0,29 |
| 14 | + 0,5 % VTMO +0,5% AMEO | 695 | 610 | 0,85 | 0,27 | 0,38 |
| 15 | + 0,5% VTMO + 1 % AMEO | 705 | 845 | 1,2 | 0,35 | 0,46 |

(a) 3-aminopropyle triéthoxysilane

**Revendications**

1.    Dispersion aqueuse de polymère à pH compris entre 4 et 8 comportant :

11

a) des particules de polymère présentant une température de transition vitreuse comprise entre - 20 et + 50°C et résultant de la polymérisation en émulsion des monomères suivants :
- 30 à 70 parties en poids de styrène,
- 30 à 70 parties en poids de (meth)acrylate d'alkyle en $C_1$-$C_8$,
- 0,5 à 8 parties en poids d'un acide carboxylique à insaturation éthylénique, et de :
b) 0,1 à 2% en poids de gamma-aminopropyltriéthoxysilane par rapport au poids de monomères a), ladite dispersion contenant de 30 à 70 % en poids de matière sèche.

2. Dispersion aqueuse selon la revendication 1 caractérisée en ce que les monomères comportent en outre de 0,1 à 2 parties en poids d'un monomère surfactant sulfoalkyle choisi parmi les sels cationiques du sulfoéthyl(meth)acrylate, du sulfopropyl(meth)acrylate, du vinylsulfonate, du (meth)allylsulfonate et de l'acrylamido-2 methyl-2 propane sulfonate.

3. Dispersion selon la revendication 2, caractérisée en ce que les sels cationiques sont les sels de sodium.

4. Dispersion aqueuse selon l'une quelconque des revendications précédentes, caractérisée en ce que les monomères comportent en outre de 0,1 à 2 parties en poids d'un silane insaturé de formule :
$$R_1 - Si -(OR_2)_3 \qquad (1)$$
dans laquelle :
$R_1$ est un reste organique présentant une insaturation éthylénique en position omega,
Les radicaux $R_2$ identiques ou différents représentent un radical alkyle en $C_1$-$C_4$ porteurs éventuellement d'un radical alcoxy en $C_1$-$C_3$.

5. Dispersion selon la revendication 4, caractérisé en ce que le silane insaturé est le vinyltrimethoxysilane.

6. Utilisation d'une dispersion aqueuse telle que définie à l'une quelconque des revendications précédentes comme liants pour compositions de revêtement, en particulier comme colles, peintures, crépis de façades pour le bâtiment et comme additif pour ciment.

**Office européen des brevets**

# RAPPORT DE RECHERCHE EUROPEENNE

Numero de la demande

EP 92 40 3122

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | CHEMICAL ABSTRACTS, vol. 109, no. 12, 19 Septembre 1988, Columbus, Ohio, US; abstract no. 97710m, J. PRIDAL 'polymer-coated glass fibers for mortar reinforcement' page 287 ;colonne 1 ; * abrégé * & CS-A-249 961 15 Février 1988 --- | 1,6 | C09D133/06 C09D125/14 C09J133/06 C09J125/14 C08K5/54 |
| D,Y | EP-A-0 215 518 (DSM) * colonne 5-6; example 1, example comparatif 1 * * revendications 1,4,8-9 * --- | 1-2,6 | |
| Y | EP-A-0 214 696 (DSM) * colonne 6; example 1, example comparatif 1 * * revendications 1-3,5,7-9 * --- | 1-2,6 | |
| A | EP-A-0 303 297 (MITSUBISHI KASEI VINYL COMPANY) * page 3, ligne 37 - ligne 42 * * page 4, ligne 21 - ligne 28 * * page 4, ligne 36 - ligne 38 * * page 4, ligne 51 - ligne 52 * * page 9; tableau 1 * * revendications 1,4 * ----- | 1-6 | **DOMAINES TECHNIQUES RECHERCHES (Int. Cl.5)** C09D C09J C08K |

Le présent rapport a été établi pour toutes les revendications

| Lieu de la recherche | Date d'achèvement de la recherche | Examinateur |
|---|---|---|
| LA HAYE | 15 FEVRIER 1993 | SIEMENS T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

    & : membre de la même famille, document correspondant

EPO FORM 1503 03.82 (P0402)